# EUROPÄISCHE PATENTSCHRIFT

(11) **EP 1 968 172 B1**
(45) Veröffentlichungstag und Bekanntmachung des Hinweises auf die Patenterteilung: **06.07.2016**
(21) Anmeldenummer: 08003666.8
(22) Anmeldetag: 28.02.2008
(51) Int. Cl.: H02K 21/22, H02K 29/03, H02K 7/18

(54) **Generator für Windenergieanlagen**
Generator for wind farms
Générateur pour éoliennes

(30) Priorität: 06.03.2007 DE 102007011261
(43) Veröffentlichungstag der Anmeldung: 10.09.2008
(73) Patentinhaber: VENSYS Energy AG, 66539 Neunkirchen (DE)
(72) Erfinder: Jöckel, Stephan, 36358 Herbstein (DE)
(74) Vertreter: Bernhardt, Reinhold

(56) Entgegenhaltungen:
- EP-A1- 0 483 372
- EP-A1- 1 306 963
- EP-A2- 0 544 310
- EP-A2- 1 586 769
- WO-A1-2006/029990
- WO-A1-2006/032635
- DE-A1- 10 147 310
- DE-A1- 10 233 900
- US-A- 5 677 587
- US-A1- 2006 244 336
- DRAEGER J: "REDUZIERUNG VON RELUKTANZMOMENTEN. ÖREDUCING RELUCTANCE TORQUE", F & M. FEINWERKTECHNIK MIKROTECHNIK MESSTECHNIK, HANSER, MUNCHEN, DE, Bd. 103, Nr. 7/08, 1. August 1995 (1995-08-01), Seiten 433-436, XP000524176, ISSN: 0944-1018
- JANG H ET AL: "Performance of a Brushless DC Motor due to the Axial Geometry of the Permanent Magnet", IEEE TRANSACTIONS ON MAGNETICS, IEEE SERVICE CENTER, NEW YORK, NY, US, Bd. 33, Nr. 5, 1. September 1997 (1997-09-01), Seiten 4101-4103, XP011086386, ISSN: 0018-9464, DOI: DOI:10.1109/20.619676

## Beschreibung

Die Erfindung betrifft einen Generator für eine Windenergieanlage, der von Wicklungen umgebene, durch Nuten getrennte Zähne und die Pole des Erregerfeldes bildende Permanentmagnete aufweist.

Ein wichtiges Ziel bei der Weiterentwicklung von Windenergieanlagen besteht in der Minderung ihrer im Betrieb abgegebenen Geräusche. Ein hoher Geräuschpegel ergibt sich vor allem dann, wenn der Turm oder andere Teile der Anlage mit ihrer Eigenfrequenz angeregt werden. In erster Linie sind zur Geräuschbekämpfung daher Schwingungsanregungen zu unterbinden.

Eine der Ursachen für Geräusche kann der Zahneingriff in einem die Drehung des Rotors auf den Generator übertragenden Getriebe sein. Aber auch der Generator selbst bildet eine Quelle für Schwingungsanregungen. Hauptursache hierfür sind die sogenannten Nutrastmomente. Bekannte Mittel zu deren Unterdrückung liegen in der Schrägung der Pole oder/und Zähne.

Aus der EP 0 995 257 B1 ist eine Windenergieanlage bekannt, die zur Geräuschminderung einen Synchrongenerator verwendet, dessen Läufer n-Pole trägt, die in Bezug auf eine die Drehachse des Läufers enthaltene Ebene asymmetrisch angeordnet sind. Weitere Maßnahmen zur Reduktion lokaler Schwingungsanregungen im Generator bestehen in einer pfeilförmigen Ausbildung der Polgeometrie sowie der Ausbildung von Polschuhen mit trapezförmigem Querschnitt.

Eine Windenergieanlage mit einem Permanentmagnete aufweisenden Außenläufer eines Synchrongenerators ist aus EP 1 586 769 A2 bekannt.

Aus US 5,677,587 A ist eine elektrische Maschine mit einem Stator bekannt, dessen Pole bildende Permanentmagnete bezogen auf die Drehrichtung eines Rotors unterschiedlich geneigt sind und dadurch eine Verringerung des Rastmoments bewirken. Aus der WO 2006/02990 A1, der EP 1 306 963 A1, der EP 0 554 310 A2 und der EP 1 586 769 A2 gehen weitere elektrische Maschinen hervor.

Der Erfindung liegt die Aufgabe zugrunde, weitere Möglichkeiten zur Geräuschminderung bei Windenergieanlagen zu erschließen.

Diese Aufgabe wird durch einen Generator der eingangs erwähnten Art gelöst, welcher dadurch gekennzeichnet ist, dass vordere und hintere Kanten jedes einzelnen Pols bezogen auf die Drehachse des Läufers in dieselbe Richtung geneigt sind und die unmittelbar nebeneinander angeordneten vorderen und hinteren Kanten aufeinanderfolgender Pole oder aufeinanderfolgender Gruppen in dieselbe Richtung geneigter Pole bezogen auf die Drehachse des Läufers in jeweils entgegengesetzter Richtung geneigt sind.

Vorteilhaft erfolgt eine Unterdrückung von Schwingungsanregungen dadurch, dass im Generatorbetrieb durch die Pole erzeugte, auf die Zähne einwirkende Kräfte kompensiert werden, indem aufeinander folgende Pole oder aufeinander folgende Gruppen von Polen jeweils entgegengesetzte solche Kräfte erzeugen.

Ist der Quotient aus der Anzahl der Nuten und aus dem Produkt der Anzahlen der Pole und Wicklungsphasen gebrochen und > 1, treffen in einem solchen Generator nicht alle Rastmomente synchron auf eine Nut, wodurch das Nutrastmoment und damit Schwingungsanregungen durch den Generator weitgehend unterdrückt sind.

Vorzugsweise liegt der genannte Quotient zwischen 1 und 1,5. Ferner sind in der bevorzugten Ausführungsform der Erfindung die Permanentmagnete mit dem Läufer des Generators verbunden. Vorzugsweise handelt es sich bei dem Läufer um einen Außenläufer. Darüber hinaus ist in der bevorzugten Ausführungsform der Erfindung der Läufer des Generators zum direkten Antrieb durch den Rotor der Windenergieanlage ohne zwischengeschaltetes Getriebe vorgesehen. In diesem Fall wirken sich die beschriebenen Maßnahmen besonders vorteilhaft aus, weil wegen des hohen Integrationsgrades des Generators in den Turm der Windenergieanlage keine dämpfenden Kopplungselemente zwischen Generator und Turmgehäuse möglich sind.

Bei den obengenannten Gruppen handelt es sich vorzugsweise um Gruppen aus zwei Polen.

Als weitere Maßnahme zur Geräuschminderung kann vorgesehen sein, dass die Pole in Bezug auf eine Ebene, in welche die Drehachse des Generators fällt, unsymmetrisch angeordnet sind.

Die Erfindung wird nachfolgend anhand von Beispielen und Ausführungsbeispielen sowie der beiliegenden, sich auf diese Beispiele und Ausführungsbeispiele beziehenden Zeichnungen näher erläutert. Es zeigen:
- Fig. 1 bis 3: zum Verständnis der Erfindung gezeigte Generatoren von Windenergieanlagen in schematischer Teilansicht,
- Fig. 4 bis 6: verschiedene Darstellungen zur Erläuterung am Ständer des Generators von Fig. 2 auftretender Kräfte, und
- Fig. 7 und 8: Ausführungsbeispiele von Generatoren erfindungsgemäßer Windenergieanlagen in schematischer Teildarstellung.

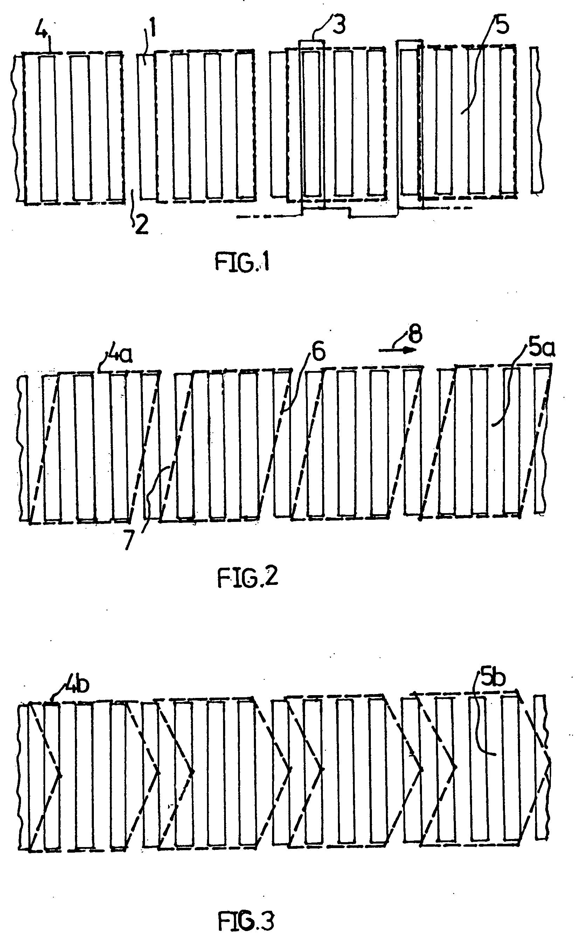

Fig. 1 zeigt in einer abgewickelten Draufsicht einen Teil über den Umfang eines Generatorständers verteilter Zähne 1, die durch eine Nut 2 voneinander getrennt sind. Jeder der Zähne ist von einer Wicklung 3 umgeben. Fig. 1 zeigt beispielhaft eine solche Wicklung. Entsprechend drei vorhandenen Wicklungsphasen sind die Wicklungen 3 jedes dritten Zahns 1 miteinander verbunden und in Reihe geschaltet. Den Stirnseiten der Zähne 1 liegen unter Bildung des Generatorluftspalts radial im Abstand Permanentmagnete 4 gegenüber, die mit dem im Übrigen nicht gezeigten Läufer des Generators verbunden sind und jeweils einen Pol 5 des Erregerfeldes bilden. In dem zum Verständnis der Erfindung gezeigten Beispiel weisen sowohl die Stirnflächen der Zähne 1 als auch der Pole 5 eine Rechteckgeometrie auf.

Wie Fig. 1 erkennen lässt, kommen auf einen Pol 5 jeweils vier Nuten. Bei drei Wicklungsphasen beträgt der Quotient aus der Anzahl der Nuten und aus dem Produkt der Zahlen der Pole und Wicklungsphasen also 1,33. Durch diese Geometrie des Generators sind Geräusche entwickelnde Rastmomente deutlich vermindert.

Abweichend von dem Beispiel von Fig. 1 weisen bei dem Beispiel nach Fig. 2, das ebenfalls zum besseren Verständnis der Erfindung gezeigt ist, durch Permanentmagnete 4a gebildete Pole 5a keine Rechteck-, sondern eine Parallelogrammform auf. Zueinander parallele Kanten 6 und 7 der Pole 5a sind zur Bewegungsrichtung des Läufers gemäß Pfeil 8 bzw. zur Drehachse geneigt. Durch diese Neigung wird gegenüber dem Beispiel von Fig. 1 eine weitere Verringerung des Rastmoments und damit noch geringere Geräuschentwicklung der Windenergieanlage erreicht.

Eine ähnliche Geräuschminderung gegenüber dem Beispiel von Fig. 1 ergibt sich bei dem zum Verständnis der Erfindung gezeigten Beispiel von Fig. 3 , das Permanentmagnete 4b aufweist, welche Pole 5b in Pfeilform bilden. Auch hier tritt durch schräg gestellte Kanten der Pole eine weitere, Rastmomenten entgegenwirkende "Verschmierung" auf.

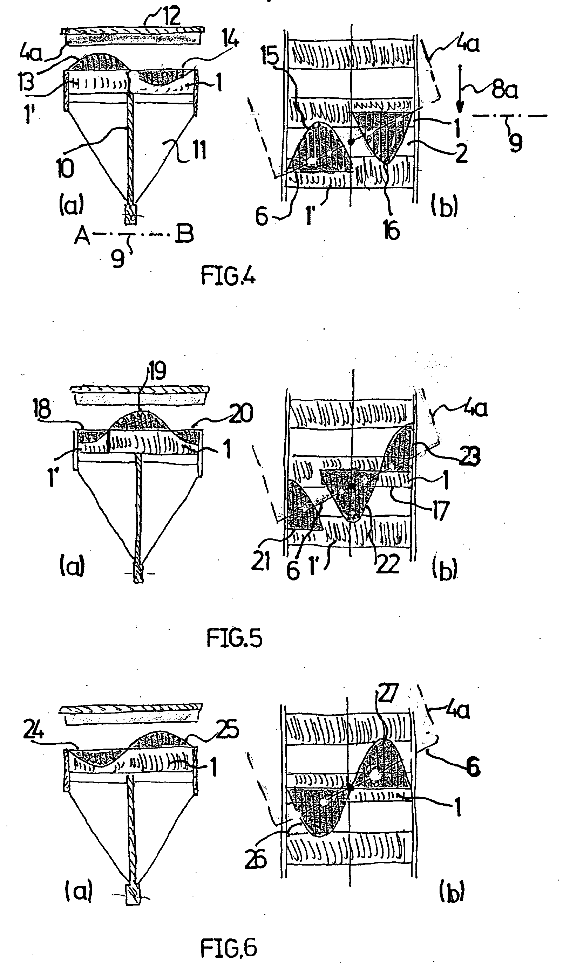

Es wird nun auf die Fig. 4 bis 6 Bezug genommen, wo erläutert ist, welche Kräfte an den Zähnen 1 des Generators von Fig. 2 in dessen Betrieb angreifen.

Die Teilfiguren (a) zeigen jeweils einen Schnitt durch eine die Drehachse 9 des Generators enthaltende Ebene, die Teilfiguren (b) eine radiale Draufsicht auf den Generator. Wie die Teilfiguren (a) erkennen lassen, sind die Zähne 1 bildende Blechpakete auf einem Unterbau mit einer zur Drehachse 9 senkrechten Scheibe 10 und dazu senkrechten Stützblechen 11 angeordnet. Die Schnittdarstellung der Teilfiguren (a) lässt ferner einen die Permanentmagnete 4a haltenden Läuferring 12 erkennen.

Fig. 4 zeigt den Fall, dass die Mitte der in Bewegungsrichtung (Pfeil 8) vorderen Kante 6 eines Permanentmagneten 4a über der Mitte einer Nut 2 steht. Damit erreicht ein Teil des Permanentmagneten 4a bzw. des Pols 5a bereits den nächsten Zahn 1', während ein anderer Teil noch über dem benachbarten Zahn 1 liegt. Wegen der unterschiedlichen Position der benachbarten Zähne 1 und 1' ergeben sich in der Hälfte des Zahns 1' auf der Seite A des Generators radial nach außen wirkende Kräfte 13 während in der Hälfte des Zahns 1, die auf der anderen Seite B des Generators liegt, radial nach innen gerichtete Kräfte 14 auftreten. Ferner ergeben sich an dem Zahnl' in der Hälfte auf der A-Seite tangentiale, entgegen der Bewegungsrichtung (Pfeil 8) gerichtete Kräfte 15, in der Hälfte des Zahns 1 auf der B-Seite in Bewegungsrichtung weisende tangentiale Kräfte 16.

Fig. 5 zeigt den Fall, dass eine Kante 6 eines Permanentmagneten 4a mit ihrer Mitte auf der Mitte einer vorderen Kante 17 eines Zahns 1 liegt. In dieser Position ergeben sich in einem Endbereich des nächsten Zahns 1' auf der A-Seite des Generators radial nach innen wirkende Kräfte 18. In einem Mittenbereich des Zahns 1 treten radial nach außen wirkende Kräfte 19 auf und im Endbereich dieses Zahns auf der BSeite des Generators radial nach innen gerichtete Kräfte 20. In ähnlicher Weise sind tangentiale Kräfte 21 bis 23 verteilt.

Fig. 6 zeigt den Fall, dass die Vorderkante 6 eines Permanentmagneten 4a mit ihrer Mitte über der Mitte eines Zahns 1 steht. In der Hälfte des Zahns 1 auf der A-Seite des Generators ergeben sich radial nach innen gerichtete Kräfte 24, in dessen anderer Hälfte auf der B-Seite des Generators radial nach außen gerichtete Kräfte 25. In der Hälfte des Zahns 1 auf der A-Seite treten tangentiale Kräfte in Bewegungsrichtung, in der anderen Hälfte tangentiale Kräfte entgegen der Bewegungsrichtung des Permanentmagneten 4a auf.

Durch die beschriebenen Kräfteverteilungen ergeben sich bei Drehung des Läufers um den Ständer am Ständer Kippmomente sowohl in radialer als auch tangentialer Richtung. Daraus folgen periodische Anregungen zu Schwingungen, die sich vom Ständer auf das Turmgehäuse und den Turm übertragen können und eine weitere Ursache für Geräusche der Windenergieanlage bilden.

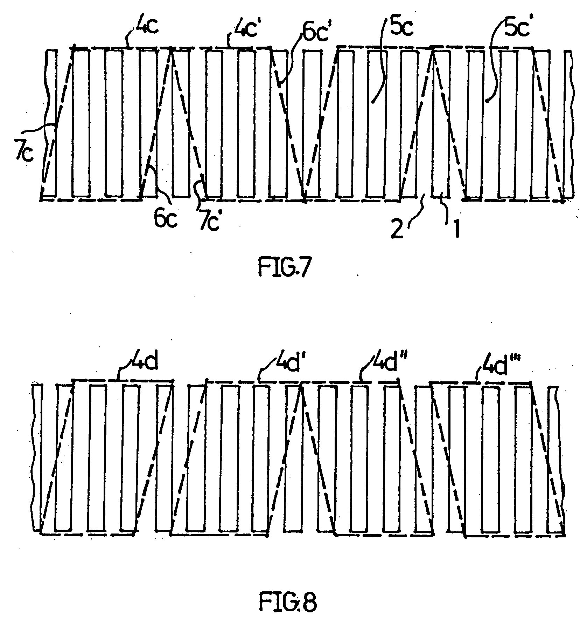

Eine zusätzliche Geräuschminderung gegenüber dem Ausführungsbeispiel von Fig. 2 kann daher durch die in Fig. 7 und 8 gezeigten Ausführungsbeispiele für einen Generator einer Windenergieanlage erreicht werden.

Gemäß Fig. 7 sind die Kanten 6c und 7c und die Kanten 6c' und 7c' aufeinander folgender Permanentmagnete 4c und 4c' in Bezug auf die Bewegungsrichtung der Permanentmagnete bzw. in Bezug auf die Drehachse entgegengesetzt geneigt. Die an den jeweiligen Permanentmagneten angreifenden Kräfte heben sich dadurch gegenseitig weitgehend auf.

Eine solche Wirkung wird auch bei dem Ausführungsbeispiel von Fig. 8 erreicht, bei dem jeweils auf zwei benachbarte, zueinander parallele Permanentmagnete 4d und 4d' ein zum vorangehenden Permanentmagnet 4d' geneigter Permanentmagnet 4d" folgt.

## Patentansprüche

1. Generator für eine Windenergieanlage, der von Wicklungen (3) umgebene, durch Nuten (2) getrennte Zähne (1) und die Pole (5c,5c') des Erregerfeldes bildende Permanentmagnete (4c,4c';4d,4d',4d",4d''') aufweist,
**dadurch gekennzeichnet,**
**dass** vordere und hintere Kanten (6c,6c';7c,7c') jedes einzelnen Pols (5c,5c') bezogen auf die Drehachse des Läufers in dieselbe Richtung geneigt sind und die unmittelbar nebeneinander angeordneten vorderen und hinteren Kanten (6c,6c';7c,7c') aufeinanderfolgender Pole (5c,5c') oder aufeinanderfolgender Gruppen in dieselbe Richtung geneigter Pole bezogen auf die Drehachse des Läufers in jeweils entgegengesetzter Richtung geneigt sind.

2. Generator nach Anspruch 1,
**dadurch gekennzeichnet,**
**dass** der Quotient aus der Anzahl der Nuten (2) und aus dem Produkt der Anzahlen der Pole (5c,5c') und Wicklungsphasen gebrochen und > 1 ist.

3. Generator nach Anspruch 1 oder 2,
**dadurch gekennzeichnet,**
**dass** der Quotient zwischen 1 und 1,5 liegt.

4. Generator nach einem der Ansprüche 1 bis 3,
**dadurch gekennzeichnet,**
**dass** die Permanentmagnete (4c,4c';4d,4d',4d",4d''') mit dem Läufer des Generators verbunden sind.

5. Generator nach einem der Ansprüche 1 bis 4,
**dadurch gekennzeichnet,**
**dass** der Läufer des Generators ein Außenläufer ist.

6. Generator nach einem der Ansprüche 1 bis 5,
**dadurch gekennzeichnet,**
**dass** der Läufer des Generators zum direkten Antrieb durch den Rotor der Windenergieanlage ohne zwischengeschaltetes Getriebe vorgesehen ist.

7. Generator nach einem der Ansprüche 1 bis 6,
**dadurch gekennzeichnet,**
**dass** die Gruppen jeweils zwei Pole (5c,5c') umfassen.

8. Generator nach einem der Ansprüche 1 bis 7,
**dadurch gekennzeichnet,**
**dass** die Nuten (2) oder/und Pole (5c,5c') in Bezug auf eine Ebene, in welche die Drehachse des Läufers des Generators fällt, unsymmetrisch angeordnet sind.

## Claims

1. Generator for a wind energy installation, which generator has teeth (1), which are surrounded by windings (3) and are separated by slots (2), and permanent magnets (4c, 4c'; 4d, 4d', 4d'', 4d'''), which form the poles (5c, 5c') of the excitation field,
**characterized**
**in that** front and rear edges (6c, 6c'; 7c, 7c') of each individual pole (5c, 5c') are inclined in the same direction with respect to the rotation axis of the rotor, and the front and rear edges (6c, 6c'; 7c, 7c'), which are arranged immediately next to one another, of successive poles (5c, 5c') or successive groups of poles which are inclined in the same direction are inclined in respectively opposite directions with respect to the rotation axis of the rotor.

2. Generator according to Claim 1,
**characterized**
**in that** the quotient of the number of slots (2) and the product of the numbers of poles (5c, 5c') and winding phases is a fraction and > 1.

3. Generator according to Claim 1 or 2,
**characterized**
**in that** the quotient is between 1 and 1.5.

4. Generator according to one of Claims 1 to 3,
**characterized**
**in that** the permanent magnets (4c, 4c'; 4d, 4d', 4d'', 4d"') are connected to the rotor of the generator.

5. Generator according to one of Claims 1 to 4,
**characterized**
**in that** the rotor of the generator is an external rotor.

6. Generator according to one of Claims 1 to 5,
**characterized**
**in that** the rotor of the generator is provided for direct driving by the rotor of the wind energy installation without an intermediate gear mechanism.

7. Generator according to one of Claims 1 to 6,
**characterized**
**in that** the groups each comprise two poles (5c, 5c').

8. Generator according to one of Claims 1 to 7,
**characterized**
**in that** the slots (2) or/and poles (5c, 5c') are arranged asymmetrically with respect to a plane in which the rotation axis of the rotor of the generator lies.

## Revendications

1. Générateur pour une installation éolienne qui présente des dents (1) entourées par des bobinages (3), séparées par des rainures (2), et des aimants permanents (4c, 4c' ; 4d, 4d', 4d", 4d"') formant les pôles (5c, 5c') du champ d'excitation, **caractérisé en ce que** les bords avant et arrière (6c, 6c' ; 7c, 7c') de chaque pôle (5c, 5c') sont inclinés dans la même direction par rapport à l'axe de rotation du rotor et les bords avant et arrière (6c, 6c' ; 7c, 7c') disposés directement les uns à côté des autres de pôles successifs (5c, 5c') ou de groupes successifs de pôles inclinés dans la même direction sont inclinés dans la direction à chaque fois opposée par rapport à l'axe de rotation du rotor.

2. Générateur selon la revendication 1, **caractérisé en ce que** le quotient du nombre de rainures (2) et du produit des nombres de pôles (5c, 5c') et des phases de bobinages est un nombre décimal et > 1.

3. Générateur selon la revendication 1 ou 2, **caractérisé en ce que** le quotient est situé 1 et 1,5.

4. Générateur selon l'une quelconque des revendications 1 à 3, **caractérisé en ce que** les aimants permanents (4c, 4c' ; 4d, 4d', 4d", 4d"') sont reliés au rotor du générateur.

5. Générateur selon l'une quelconque des revendications 1 à 4, **caractérisé en ce que** le rotor du générateur est un rotor externe.

6. Générateur selon l'une quelconque des revendications 1 à 5, **caractérisé en ce que** le rotor du générateur est destiné à l'entraînement direct, par le rotor, de l'installation éolienne sans dispositif d'entraînement intercalé.

7. Générateur selon l'une quelconque des revendications 1 à 6, **caractérisé en ce que** les groupes comprennent à chaque fois deux pôles (5c, 5c').

8. Générateur selon l'une quelconque des revendications 1 à 7, **caractérisé en ce que** les rainures (2) et/ou les pôles (5c, 5c') sont disposés de manière asymétrique par rapport à un plan dans lequel se trouve l'axe de rotation du rotor du générateur.
